# EUROPEAN PATENT APPLICATION

(11) **EP 4 184 409 A1**
(43) Date of publication of application: **24.05.2023**
(21) Application number: 22208195.2
(22) Date of filing: 17.11.2022
(51) Int. Cl.: G06Q 20/32, G06Q 20/36, G06Q 20/38, G06Q 20/02, G06Q 20/10

(54) **USE AND MANAGEMENT OF ISSUER PROVIDED PAYMENT TOKENS (SYSTEMS AND METHODS)**

(30) Priority: 17.11.2021 US 202163264221 P; 16.11.2022 US 202218056097
(71) Applicant: JPMorgan Chase Bank, N.A., New York, NY 10179 (US)
(72) Inventor: MOORE, John D., New York, 10179 (US); CAREY, Dave, New York, 10179 (US); SPECTOR, Howard, New York, 10179 (US)
(74) Representative: Leonhard, Frank Reimund

(57) **Abstract**

Systems and methods for use and management of issuer-provided payment tokens are disclosed. A method may include: receiving, at a financial institution computer program executed by a backend for a financial institution, a request for a payment token for a primary account number (PAN) from a token requestor computer program; requesting, by the financial institution computer program, the payment token for the PAN from a token provider, wherein the token provider is configured to generate the payment token and store a mapping of the PAN to the payment token in a token provider token vault; receiving, by the financial institution computer program and from the token provider, the payment token; storing, by the financial institution computer program, the mapping of the PAN to the payment token in a financial institution token vault; and returning, by the financial institution computer program, the payment token to the token requestor computer program.

## Description

This application claims priority to, and the benefit of, U.S. Provisional Patent Application Ser. No. 63/264,221, filed November 17, 2021, and the priority of US 18/056,097 filed November 16, 2022 the disclosure of which are hereby incorporated, by reference, in its entirety.

### BACKGROUND OF THE INVENTION

### 1. Field of the Invention

Embodiments generally relate to systems and methods for use and management of issuer provided payment tokens.

### 2. Description of the Related Art

In general, when a customer, merchant, or digital wallet request a payment token for a financial instrument, the customer, merchant, or digital wallet request a payment token from a payment network, such as Visa or Mastercard. The payment network then generates the payment token and maintains a mapping of the payment token to the primary account number (or PAN) for the financial institution and stores a mapping or association between the payment token and the PAN in a token vault.

### SUMMARY OF THE INVENTION

Systems and methods for use and management of issuer provided payment tokens are disclosed. According to an embodiment, a method for use and management of issuer provided payment tokens may include: (1) receiving, at a financial institution computer program executed by a backend for a financial institution, a request for a payment token for a primary account number (PAN) from a token requestor computer program; (2) requesting, by the financial institution computer program, the payment token for the PAN from a token provider, wherein the token provider is configured to generate the payment token and store a mapping of the PAN to the payment token in a token provider token vault; (3) receiving, by the financial institution computer program and from the token provider, the payment token; (4) storing, by the financial institution computer program, the mapping of the PAN to the payment token in a financial institution token vault; and (5) returning, by the financial institution computer program, the payment token to the token requestor computer program.

In one embodiment, the token requestor computer program comprises a merchant computer program or a mobile electronic wallet.

In one embodiment, the token provider is configured to generate a cryptogram for the payment token, and the method further comprises receiving, by the financial institution computer program, the cryptogram from the token provider.

In one embodiment, the token provider comprises a payment network or a third-party token provider.

According to another embodiment, a method for use and management of issuer provided payment tokens may include: (1) receiving, at a financial institution computer program executed by a backend for a financial institution, a request for a payment token for a primary account number (PAN) from a token requestor computer program; (2) generating, by the financial institution computer program, the payment token for the PAN; (3) storing, by the financial institution computer program, a mapping of the PAN to the payment token in a financial institution token vault; and (4) returning, by the financial institution computer program, the payment token to the token requestor computer program.

In one embodiment, the token requestor computer program comprises a merchant computer program or a mobile electronic wallet.

In one embodiment, the method may also include providing, by the financial institution computer program, the payment token and the PAN to a third party, wherein the third party is configured to store the mapping between the payment token and the PAN in a third party token vault.

In one embodiment, the method may also include: generating, by the financial institution computer program, a cryptogram for the payment token; and returning, by the financial institution computer program, the cryptogram to the token requestor computer program.

According to another embodiment, a method for use and management of issuer provided payment tokens may include: (1) receiving, at an electronic interface for a financial institution computer program executed by a backend for a financial institution, a request from a customer computer application to provide a payment token for a primary account number (PAN) to a merchant; (2) requesting, by the financial institution computer program, the payment token for the PAN from a token provider, wherein the token provider is configured to generate the payment token and store a mapping of the PAN to the payment token in a token provider token vault; (3) receiving, by the financial institution computer program and from the token provider, the payment token; (4) storing, by the financial institution computer program, the mapping of the PAN to the payment token in a financial institution token vault; and (5) providing, the financial institution computer program, the payment token, a payment token expiration date, and a transaction identifier to the merchant.

In one embodiment, the token provider comprises a third-party token provider.

In one embodiment, the method may also include: conducting, by the financial institution computer program, a cardholder-initiated transaction for a $0 authorization using the payment token; and receiving, by the financial institution computer program, a cryptogram and the transaction identifier from a payment network.

In one embodiment, the method may also include: generating. by the financial institution computer program, a cryptogram for the payment token; and receiving, the financial institution computer program, the transaction identifier from a payment network.

In one embodiment, the token provider comprises the payment network.

### BRIEF DESCRIPTION OF THE DRAWINGS

In order to facilitate a fuller understanding of the present invention, reference is now made to the attached drawings. The drawings should not be construed as limiting the present invention but are intended only to illustrate different aspects and embodiments.
Figure 1 depicts a system for use and management of issuer provided payment tokens according to an embodiment.
Figure 2 depicts a method for use and management of issuer provided payment tokens according to one embodiment.
Figure 3 depicts a method for use and management of issuer provided payment tokens according to another embodiment.
Figure 4 depicts a method for use and management of issuer provided payment tokens according to another embodiment.
Figure 5 depicts an exemplary computing system for implementing aspects of the present disclosure.

### DETAILED DESCRIPTION OF PREFERRED EMBODIMENTS

Embodiments generally relate to systems and methods for use and management of issuer provided payment tokens.

In embodiments, instead of requesting a payment token from a payment network, the customer, merchant, or digital wallet may request a payment token directly from the issuing financial institution using an application programming interface (API). The issuing financial institution may then request a payment token for the PAN from the payment network, and the payment network may return the payment token. The payment token and the issuing financial institution may both maintain a mapping of the PAN to the payment token in their respective token vaults.

The issuing financial institution may then provide the payment token to the token requestor.

In embodiments, because the issuing financial institution maintains a mapping of payment tokens to PANs, it may manage lifecycle events involving the payment token, such as issuing a new payment token, expiring an existing payment token, etc.

In embodiments, the issuing financial institution may also generate payment tokens and may use the payment tokens in private payment network transaction, such as a debit network. To the extent that a PIN or similar may be required, a PIN may be generated. Examples of such PIN generation are provided in U.S. Provisional Patent Application No. 62/487,025 and U.S. Patent Application No. 15/957,331, the disclosures of which are hereby incorporate, by reference, in their entireties.

In embodiments, payment tokens may be associated with alternate payment currencies or accounts, including loyalty or reward point accounts, line of credit accounts (e.g., HELOCs), etc.

In embodiments, payment tokens may be a reference number that may be used for settlement. The transaction may be conducted without using a payment network, and may instead be conducted using APIs.

In embodiments, payment tokens may be single use account number, may be limited to a certain time (e.g., expire after an hour), a specific merchant, a certain number of uses, etc. In embodiments, once expired, the payment tokens may be returned to a pool of payment tokens, and may be reused at a later time.

In embodiments, the payment tokens may be provided in a manner suitable for merchants that do not support standard tokenization.

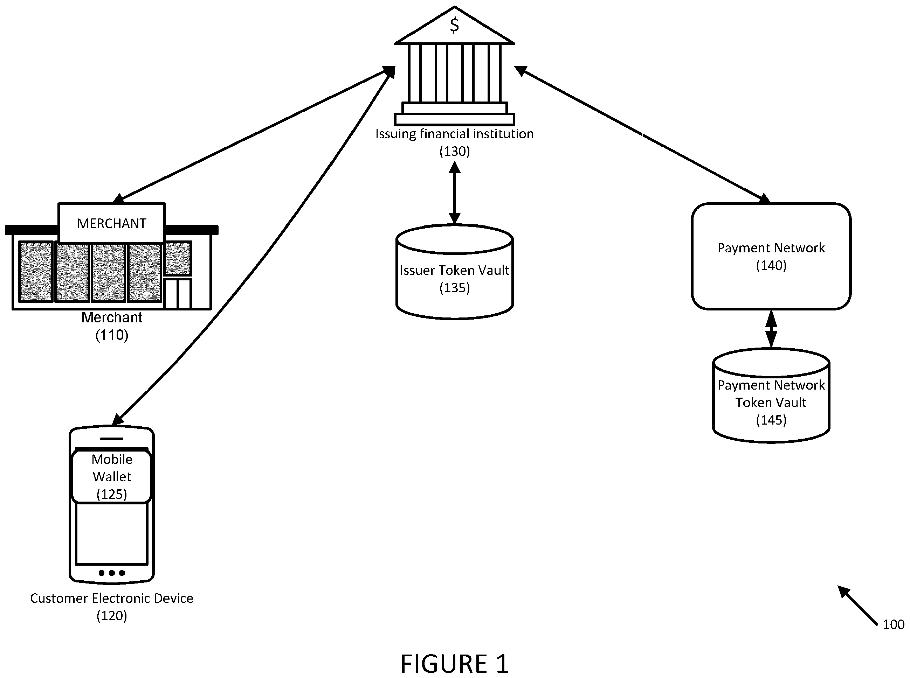

Figure 1 depicts a system for use and management of issuer provided payment tokens according to an embodiment. System 100 may include a token requestor, such as merchant 110 or mobile wallet 125 executed by customer electronic device 120. The requestor may execute a computer program or application that makes a restful API call to a backend for issuing financial institution 130 for a payment token. The requestor may provide the PAN to issuing financial institution 130.

Issuing financial institution 130 may include a backend that requests a payment token for the PAN from payment network 140. Payment network 140 may generate the payment token and may store a mapping between the PAN and payment token in payment network token vault 145.

Payment network 140 may execute a computer program that returns the payment token to issuing financial institution 130, which may store a mapping between the payment token and the PAN in issuer token vault 135. Issuing financial institution 130 may then return the payment token to the requestor.

Alternatively, issuing financial institution 130 may generate the payment token, and may optionally provide the PAN and payment token to the payment network 140.

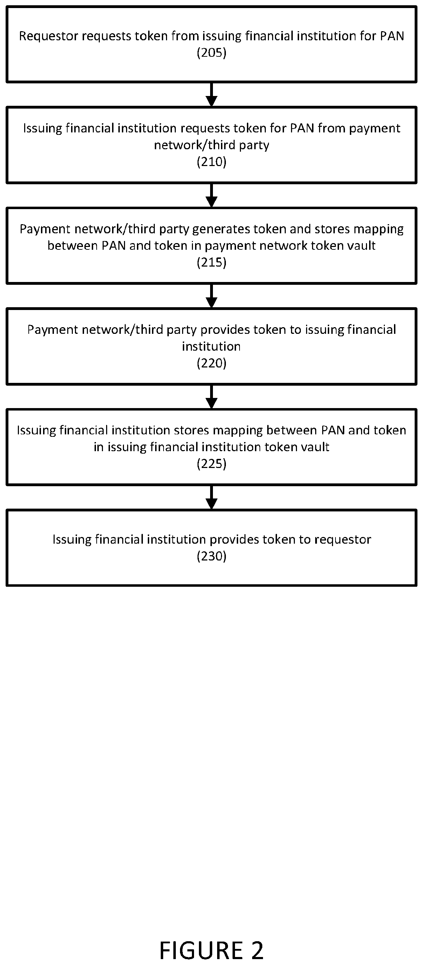

Referring to Figure 2, a method for use and management of issuer provided payment tokens according to an embodiment. In step 205, a token requestor may request a payment token for a PAN from the PAN's issuing financial institution.

In step 210, the issuing financial institution may then request the payment token for PAN from a payment network (e.g., Visa) or a third party (e.g., the Token Clearing House).

In step 215, the payment network or third party may generate the payment token and may store a mapping between the PAN and the payment token in token vault for the payment network or third party.

In one embodiment, the payment network may generate a cryptogram for the payment token. In another embodiment, the issuing financial institution may generate the cryptogram.

In step 220, the payment network or third party may provide the payment token and, if necessary, the cryptogram, to the issuing financial institution.

In step 225, the issuing financial institution may store a mapping between the PAN and the payment token in an issuing financial institution token vault, and in step 230, the issuing financial institution may provide the payment token to the requestor.

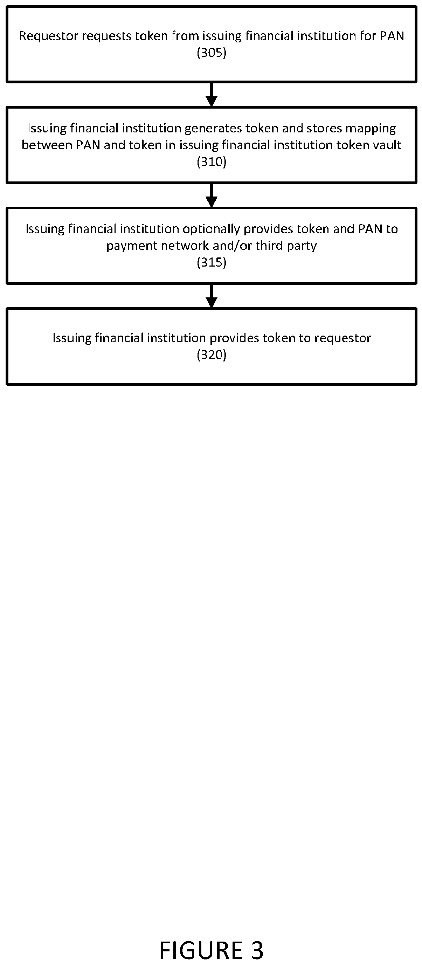

Referring to Figure 3, a method for use and management of issuer provided payment tokens according to another embodiment. In step 305, a token requestor may request a payment token for a PAN from the PAN's issuing financial institution.

In step 310, the issuing financial institution may generate the payment token and may store a mapping between the PAN and the payment token in an issuing financial institution token vault.

In embodiments, the issuing financial institution may also generate a cryptogram as necessary.

In step 315, the issuing financial institution may optionally provide the payment token and the PAN to a payment network (e.g., Visa) and/or third party (e.g., the Token Clearing House), which may store a mapping between the PAN and the payment token in their respective token vaults.

In embodiments, the payment network may generate the cryptogram.

In step 320, the issuing financial institution may provide the payment token to the requestor. The issuing financial institution or the payment network may provide the cryptogram to the requestor.

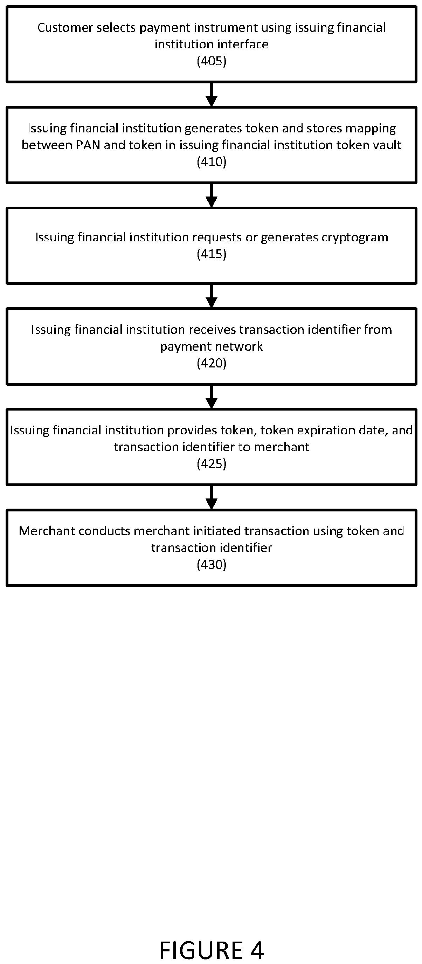

Referring to Figure 4, a method for use and management of issuer provided payment tokens according to another embodiment. In step 405, a customer may request a payment token for a merchant. For example, using an electronic interface for an issuing financial institution, such as a website, application, etc. the customer may select a payment instrument, such as a credit card, to tokenize for a merchant.

In step 410, the issuing financial institution may generate a payment token for the PAN, or may request a payment token for the PAN from a payment network (e.g., Visa) or a third party (e.g., the Token Clearing House). The issuing financial institution, the payment network, or the third party may generate the payment token and may store a mapping between the PAN and the payment token in token vault for the issuing financial institution, the payment network, or the third party.

If necessary, the payment network or third party may provide the payment token to the issuing financial institution, and the issuing financial institution may store a mapping between the PAN and the payment token in an issuing financial institution token vault.

In step 415, the issuing financial institution may request a cryptogram from the payment network or from the third party. For example, the issuing financial institution may conduct a cardholder-initiated transaction for a $0 authorization using the payment token.

Alternatively, the issuing financial institution may generate a cryptogram locally. In one embodiment, the issuing financial institution may generate the cryptogram using a cryptogram lockbox, an example of which is disclosed in U.S. Patent Application Ser. No. 16/432,623, the disclosure of which is hereby incorporated, by reference, in its entirety.

In step 420, in response to the cardholder-initiated transaction, the issuing financial institution may receive a transaction identifier from the payment network.

In step 425, the issuing financial institution may provide the payment token, the payment token's expiration date, the transaction identifier, and optionally the cryptogram to the merchant.

In step 430, for subsequent transactions, the merchant may conduct transactions using the payment token, the expiration date, and the transaction identifier.

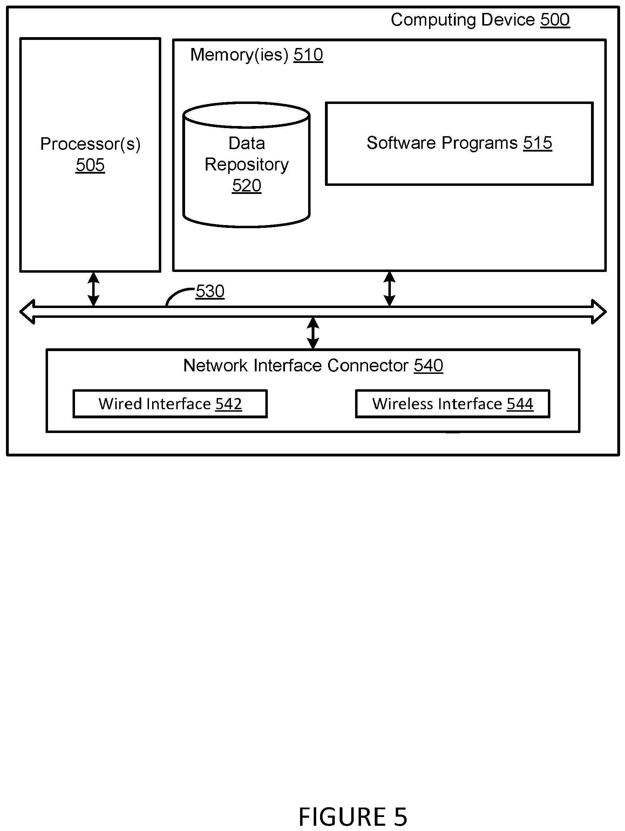

Figure 5 depicts an exemplary computing system for implementing aspects of the present disclosure. Figure 5 depicts exemplary computing device 500. Computing device 500 may represent the system components described herein. Computing device 500 may include processor 505 that may be coupled to memory 510. Memory 510 may include volatile memory. Processor 505 may execute computer-executable program code stored in memory 510, such as software programs 515. Software programs 515 may include one or more of the logical steps disclosed herein as a programmatic instruction, which may be executed by processor 505. Memory 510 may also include data repository 520, which may be nonvolatile memory for data persistence. Processor 505 and memory 510 may be coupled by bus 530. Bus 530 may also be coupled to one or more network interface connectors 540, such as wired network interface 542 or wireless network interface 544. Computing device 500 may also have user interface components, such as a screen for displaying graphical user interfaces and receiving input from the user, a mouse, a keyboard and/or other input/output components (not shown).

Although several embodiments have been disclosed, it should be recognized that these embodiments are not exclusive to each other, and features from one embodiment may be used with others.

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In one embodiment, the processing machine may be a specialized processor.

In one embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. **Method for use and management** of issuer provided payment tokens, comprising:
receiving, at a financial institution computer program executed by a backend for a financial institution, a request for a payment token for a primary account number (PAN) from a token requestor computer program;
requesting, by the financial institution computer program, the payment token for the PAN from a token provider, wherein the token provider is configured to generate the payment token and store a mapping of the PAN to the payment token in a token provider token vault;
receiving, by the financial institution computer program and from the token provider, the payment token;
storing, by the financial institution computer program, the mapping of the PAN to the payment token in a financial institution token vault;
and
returning, by the financial institution computer program, the payment token to the token requestor computer program.

2. Method of claim 1, wherein the token requestor computer program comprises a merchant computer program or a mobile electronic wallet.

3. Method of claim 1 or 2, wherein the token provider is configured to generate a cryptogram for the payment token, and the method further comprises receiving, by the financial institution computer program, the cryptogram from the token provider.

4. Method of one of claims 1 to 3, wherein the token provider comprises a payment network or a third-party token provider.

5. **Method for use and management** of issuer provided payment tokens, comprising:
receiving, at a financial institution computer program executed by a backend for a financial institution, a request for a payment token for a primary account number (PAN) from a token requestor computer program;
generating, by the financial institution computer program, the payment token for the primary account number;
storing, by the financial institution computer program, a mapping of the PAN to the payment token in a financial institution token vault; and
returning, by the financial institution computer program, the payment token to the token requestor computer program.

6. Method of claim 5, wherein the token requestor computer program comprises a merchant computer program or a mobile electronic wallet.

7. Method of claim 5 or 6, further comprising:
providing, by the financial institution computer program, the payment token and the primary account number to a third party, wherein the third party is configured to store the mapping between the payment token and the PAN in a third party token vault.

8. Method of one of claims 5 to 7, further comprising:
generating, by the financial institution computer program, a cryptogram for the payment token; and
returning, by the financial institution computer program, the cryptogram to the token requestor computer program.

9. **Method for use and management** of issuer provided payment tokens, comprising:
receiving, at an electronic interface for a financial institution computer program executed by a backend for a financial institution, a request from a customer computer application to provide a payment token for a primary account number (PAN) to a merchant;
requesting, by the financial institution computer program, the payment token for the primary account number from a token provider, wherein the token provider is configured to generate the payment token and store a mapping of the primary account number to the payment token in a token provider token vault;
receiving, by the financial institution computer program and from the token provider, the payment token;
storing, by the financial institution computer program, the mapping of the primary account number to the payment token in a financial institution token vault;
and
providing, the financial institution computer program, the payment token, a payment token expiration data, and a transaction identifier to the merchant.

10. Method of claim 9, wherein the token provider comprises a third-party token provider.

11. Method of claim 9 or 10, further comprising:
conducting, by the financial institution computer program, a cardholder-initiated transaction for a $0 (zero value) authorization using the payment token; and
receiving, by the financial institution computer program, a cryptogram and the transaction identifier from a payment network.

12. Method of one of claims 9 to 11, further comprising:
generating. by the financial institution computer program, a cryptogram for the payment token;
and
receiving, the financial institution computer program, and the transaction identifier from a payment network.

13. Method of claim 12, wherein the token provider comprises the payment network.
